# EUROPÄISCHE PATENTANMELDUNG

(11) **EP 2 348 542 A2**
(43) Veröffentlichungstag der Anmeldung: **27.07.2011**
(21) Anmeldenummer: 10186388.4
(22) Anmeldetag: 04.10.2010
(51) Int. Cl.: H01L 31/042, H01L 31/048, F24J 2/52

(54) **Dacheindeckung aus flachen Dachsteinen oder Dachziegeln**

(30) Priorität: 21.01.2010 DE 102010005281
(71) Anmelder: Eternit AG, 69126 Heidelberg (DE)
(72) Erfinder: Reintjes, Frank, 59320, Ennigerloh (DE)
(74) Vertreter: Prietsch, Reiner

(57) **Zusammenfassung**

Eine Dacheindeckung aus flachen, in Reihen auf einer Dachunterkonstruktion verlegten Dachsteinen (1), die in firstparallelen Reihen verlegt sind, wobei in First/Trauf-Richtung aufeinanderfolgende Reihen sich schuppenartig überlappen, hat einen Ausschnitt, in welchem mindestens ein Photovoltaikmodul (2.1, 2.2) im Wesentlichen plan mit der wasserführenden Fläche der Dacheindeckung angeordnet und über erste Verbindungsmittel an die seitlich angrenzenden Dachsteine angeschlossen sowie firstseitig und traufseitig über zweite Verbindungsmittel (5.1, 5.2; 6) gegen der Dachunterkonstruktion festgelegt ist, und zwar so, dass sich Dachsteine und Module ebenfalls schuppenartig überlappen.

## Beschreibung

Die Erfindung betrifft eine Dacheindeckung aus flachen, in Reihen auf einer Dachunterkonstruktion verlegten Dachsteinen oder Dachziegeln, von denen jeder einen rechten und einen linken Seitenrandbereich hat, die komplementär zueinander profiliert sind, so dass die Seitenrandbereiche benachbarter Dachsteine oder Dachziegel überlappend ineinander greifen und die Dachsteine oder Dachziegel eine im Wesentlichen plane, wasserführende Fläche je Reihe bilden, wobei die Dachsteine oder Dachziegel aufeinanderfolgender Reihen sich in First/Trauf-Richtung schuppenartig überlappen.

Weil im Rahmen der Erfindung der Unterschied zwischen Dachsteinen und Dachziegeln keine Rolle spielt, wird im Folgenden nur von Dachsteinen gesprochen, an deren Stelle jedoch auch "Dachziegel" gelesen werden kann.

Wenn eine derartige Dacheindeckung mit Photovoltaikmodulen ausgestattet werden soll, werden diese bisher aufgeständert, das heißt auf einer gerüstartigen Unterkonstruktion beabstandet zur Dachfläche befestigt. Weil die Ständer oder Stützen lastabtragend mit der Dachunterkonstruktion verbunden sein müssen, sind in der Dacheindeckung entsprechende Durchführungen erforderlich. Diese sind arbeitsaufwendig und können auch bei sorgfältiger Abdichtung im Laufe der Zeit undicht werden.

Der Erfindung liegt die Aufgabe zugrunde, eine Dacheindeckung der einleitend angegebenen Gattung zu schaffen, die einfacher als bisher mit Photovoltaikmodulen ausgestattet werden kann.

Diese Aufgabe ist erfindungsgemäß dadurch gelöst, dass die Dacheindeckung einen Ausschnitt hat, in welchem mindestens ein Photovoltaikmodul im Wesentlichen plan mit der wasserführenden Fläche der Dacheindeckung angeordnet und über erste Verbindungsmittel an die seitlich angrenzenden Dachsteine angeschlossen sowie firstseitig und traufseitig über zweite Verbindungsmittel gegen die Dachunterkonstruktion festgelegt ist, wobei sich Dachsteine und Modul in First/Trauf-Richtung schuppenartig überlappen.

Der Kern der Erfindung besteht somit in der Integration der Photovoltaikmodule in die Dachfläche selbst. Infolgedessen entfallen die mit der bisher üblichen Aufständerung verbundenen Nachteile. Desweiteren werden nicht nur die Konstruktionsteile der bisherigen Unterkonstruktion sondern auch die Dachsteine im Bereich des Ausschnitts für die Photovoltaikmodule eingespart. Ebenfalls anders als bisher werden in die Dachunterkonstruktion auch keine zusätzlichen Windsogkräfte eingetragen. Ein weiterer Vorteil besteht in der verbesserten Optik der Dacheindeckung durch Integration statt Aufständerung der Photovoltaikmodule.

Zum seitlichen Anschluss des jeweiligen Photovoltaikmoduls an den oder die angrenzenden Dachsteine umfassen die ersten Verbindungsmittel Profilstücke, die mit der Unterseite des Moduls verklebt sind und in die Profilierung des Seitenrandbereiches des jeweils angrenzenden Dachsteins eingreifen. Folglich umfassen die ersten Verbindungsmittel einerseits Profilstücke, die von oben in den Seitenrandbereich des rechts angrenzenden Dachsteins eingreifen, andererseits Profilstücke, die von unten in den Seitenrandbereich des links angrenzenden Dachsteins eingreifen.

Zur Festlegung des jeweiligen Photovoltaikmoduls an der Dachunterkonstruktion umfassen die firstseitigen zweiten Verbindungsmittel mindestens ein Profil, das einen Schenkel hat, der mit der Unterseite des firstseitigen Randbereiches des Moduls verklebt ist, von welchem Schenkel etwa rechtwinklig ein nach unten weisender Steg zur Verbindung mit einem Element der Dachunterkonstruktion abgeht. Dieses Profil kann ein einfaches L-Profil sein. Die Dachsteine der nächsthöheren Reihe überlappen den damit firstseitig gesicherten Oberrand des Moduls schuppenförmig.

Ebenfalls zur Festlegung des jeweiligen Photovoltaikmoduls an der Dachunterkonstruktion umfassen die traufseitigen zweiten Verbindungsmittel ein auf dem firstseitigen Oberrand eines traufseitig angrenzenden Dachsteins aufliegendes Taschenprofil mit einem nach unten weisenden Schenkel zur Verbindung mit einem Element der Dachunterkonstruktion sowie ein flaches Z-Profil, dessen einer Arm mit der Unterseite des Moduls verklebt und dessen anderer Arm in das Taschenprofil einsteckbar ist. Der Unterrand des Moduls überlappt dabei den Oberrand der Dachsteine der nächsttieferen Reihe schuppenförmig und ist gleichzeitig gegen Abheben durch Windsog gesichert.

Wenn die Dacheindeckung mehr als eine Reihe Photovoltaikmodule umfassen soll, sind dritte Verbindungsmittel zwischen einem Modul einer unteren (traufseitigen) Reihe und dem entsprechenden Modul der anschließenden, oberen (firstseitigen) Reihe erforderlich. Diese dritten Verbindungsmittel umfassen ein liegendes flaches U-Profil, dessen oberer Schenkel mit der Unterseite eines traufseitigen Moduls an dessen firstseitigem Randbereich verklebt ist und dessen unterer Schenkel einen nach unten weisenden Steg zur Verbindung mit einem Element der Dachunterkonstruktion hat sowie ein weiteres Profil, das einen mit der Unterseite eines Moduls der nächsthöheren Reihe verklebten Schenkel und einen in das flache U-Profil einsteckbaren Schenkel hat.

Das weitere Profil kann ein U-Profil oder ein Z-Profil sein.

Das liegende flache U-Profil der dritten Verbindungsmittel kann insbesondere auch als firstseitiges zweites Verbindungsmittel verwendet werden, macht also die oben genannten firstseitigen zweiten Verbindungsmittel, z.B. ein L-Profil, zwischen der Unterseite des firstseitigen Randbereiches des Moduls und einem Element der Dachunterkonstruktion überflüssig.

In der Zeichnung ist eine Dacheindeckung nach der Erfindung, das heißt mit integrierten Photovoltaikmodulen, anhand einer beispielhaften Ausführungsform und deren Einzelheiten schematisch dargestellt. Es zeigt:
- Fig. 1:: einen Ausschnitt aus einer Dacheindeckung mit zwei Photovoltaikmodulen;
- Fig. 2:: die seitliche Anbindung eines Moduls an die rechts und links anschließenden Dachsteine im Schnitt;
- Fig. 3:: die Sicherung des Moduls in First/Trauf-Richtung im Bereich der firstseitig und traufseitig angrenzenden Dachsteine im Schnitt;
- Fig. 4:: den Verbindungsbereich zwischen einem Modul einer unteren Reihe und einem Modul der nächsthöheren Reihe im Schnitt;
- Fig. 5:: eine Untersicht eines einbaufertigen Moduls.

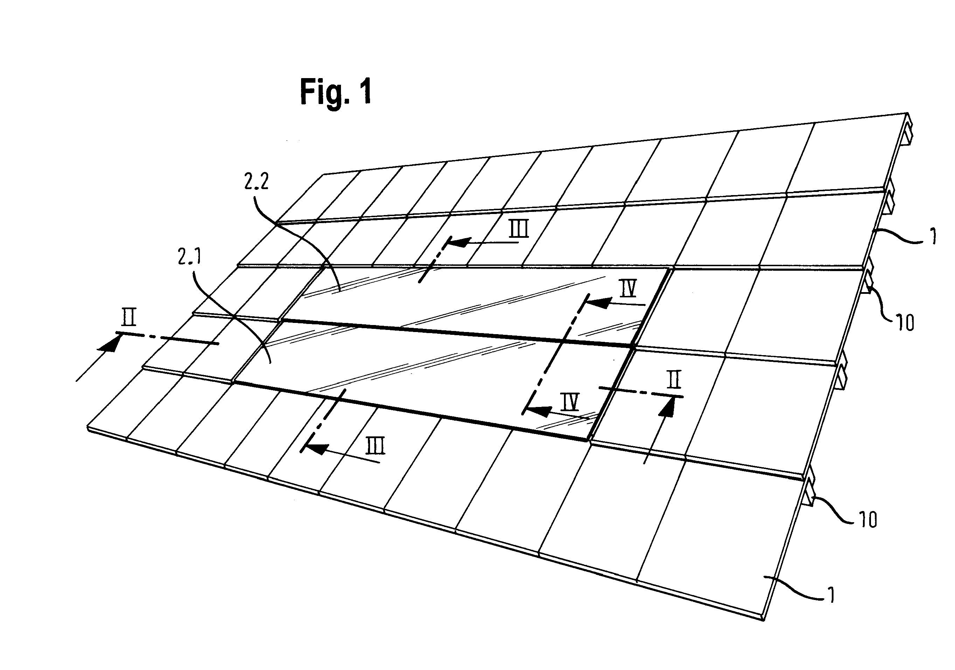

Fig. 1 zeigt einen Ausschnitt aus einer Dacheindeckung aus flachen, in firstparallelen Reihen auf einer nicht näher dargestellten Dachunterkonstruktion verlegten Dachsteinen 1. Diese Dacheindeckung hat einen sich über zwei firstparallele Reihen erstreckenden Ausschnitt, in welchem zwei langgestreckte Photovoltaikmodule 2.1 und 2.2 derart angeordnet sind, dass sie in der von der übrigen Dacheindeckung gebildeten, wasserführenden Fläche liegen und infolgedessen selbst wasserführend sind.

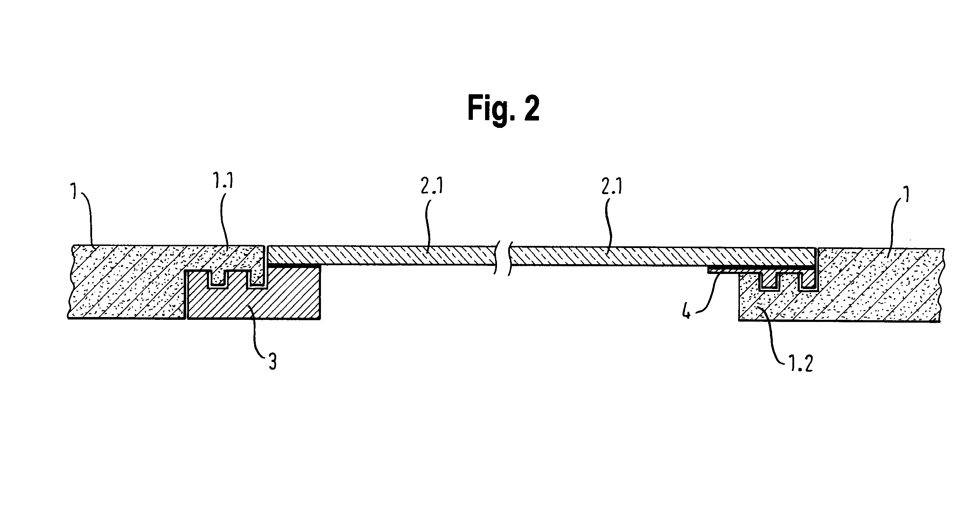

Fig. 2 zeigt einen Schnitt entsprechend der Linie II-II in Fig. 1 und veranschaulicht die seitliche An- und Einbindung des Moduls 2.1 an die linksseitig bzw. rechtsseitig anschließenden Dachsteine 1. Jeder dieser Dachsteine hat, wie üblich, einen rechten Seitenrandbereich 1.1, mit etwa der halben Dicke des übrigen Dachsteins und unterseitig einer Abfolge von zwei Längsrippen und zwei Längsnuten sowie einen linksseitigen Seitenrandbereich 1.2, der komplementär dazu profiliert ist. Eine Dacheindeckung gemäß Fig. 1 besteht je firstparalleler Reihe aus plan aneinander anschließenden, jedoch miteinander verzahnten Dachsteinen 1.

Um in eine derartige Dacheindeckung ein Modul wie 2.1 einzugliedern, ist dessen linker Seitenrand mit einem Profilstück 3 versehen, das einen über den linken Seitenrand des Moduls 2.1 überstehenden Teil hat, der komplementär zu der Profilierung des Seitenrandbereiches 1.1 des angrenzenden Dachsteins 1 ist. Der übrige Teil des Profilstücks 3 ist mit der Unterseite des Moduls 2.1 verklebt. Analog ist an dem rechten Rand des Moduls 2.1 unterseitig ein Profilstück 4 angeklebt, das komplementär zu dem Seitenrandbereich 1.2 des angrenzenden Dachsteins 1 ist. Die Höhe der Profilstücke 3 und 4 ist so bemessen, dass die Oberseiten der Dachsteine 1 und des Moduls 2.1 eine im Wesentlichen plane Fläche bilden. Die Profilstücke 3 und 4 und auch alle im Weiteren erläuterten Profile und Profilstücke können stranggepresste Profile aus Aluminium sein. Die Profilstücke 3 und 4 sind vorzugsweise durchgehende Schienen, deren Länge gleich der Breite des Moduls 2.1 ist.

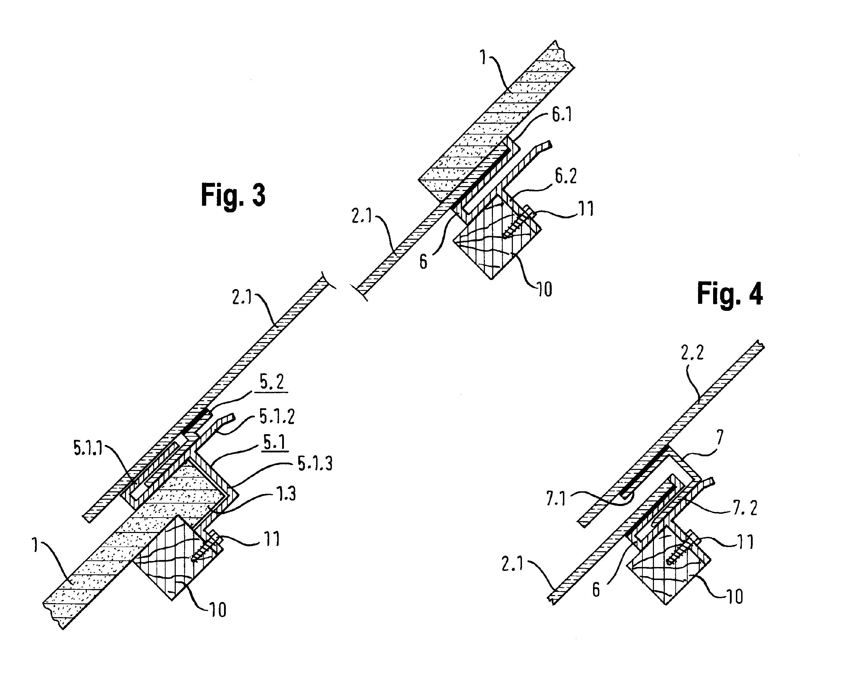

In Fig. 3 ist die Anbindung eines Moduls, z.B. des Moduls 2.1, in First/Trauf-Richtung entsprechend einem Schnitt gemäß der Linie III-III in Fig. 1 dargestellt. Der (traufseitige) Unterrand des Moduls 2.1 ist durch zwei Profile 5.1 und 5.2 abgefangen und gegen ein Element der Dachunterkonstruktion, hier eine Dachlatte 10, abgestützt. Das Profil 5.1 ist ein Taschenprofil, mit einem oberen Schenkel 5.1.1, auf welchem der Unterrandbereich des Moduls 2.1 aufliegt, einem unteren Schenkel 5.1.2, der auf dem Dachstein 1 im Bereich dessen Einhängnase 1.3 aufliegt und einem von dem unteren Schenkel abgehenden, nach unten weisenden, weiteren und zweimal abgewinkelten Schenkel 5.1.3, der den Oberrand des Dachsteins 1 umgibt und am freien Ende eine Bohrung für eine Befestigungsschraube 11 hat. Das Profil 5.2 ist ein flaches Z-Profil, dessen einer Arm mit der Unterseite des Moduls 2.1 verklebt ist und dessen anderer Arm in die Tasche des Taschenprofils 5.1 eingesteckt ist. Die Anordnung ist so getroffen, dass der Unterrand des Moduls 2.1 den Oberrand des Dachsteins 1 um eine gewisse Strecke überlappt.

Wie ebenfalls in Fig. 3 dargestellt, überlappt umgekehrt der Unterrand des Dachsteins 1 der nächsthöheren Reihe den Oberrand des Moduls 2.1. Zwischen dem unteren Randbereich des Dachsteins 1 und dem oberen Randbereich des Moduls 2.1 kann zum Schutz der Oberfläche des Moduls 2.1 eine flache Distanzleiste oder dergleichen angeordnet sein. Das Modul 2.1 liegt mit seinem oberen Randbereich auf dem oberen Schenkel eines liegenden, flachen U-Profils 6 auf, das im Prinzip dem Profil 5.1 ähnelt, jedoch an seinem oberen, mit der Unterseite des Moduls 2.1 verklebten Schenkel einen endseitigen Randschutz 6.1 für das Modul 2.1 hat und an seinem unteren Schenkel einen etwa rechtwinklig nach unten weisenden Steg 6.2 zur Verbindung mit einer Dachlatte 10 mittels einer Schraube 11 aufweist.

Anstelle des Profils 6 kann auch ein einfaches L-Profil benutzt werden, jedoch hat das dargestellte Profil 6 den Vorzug, dass es in identischer Form auch für die Verbindung von Modul zu Modul verwendet werden kann, wie in Fig. 4 entsprechend der Schnittlinie IV-IV in Fig. 1 dargestellt ist.

Fig. 4 zeigt die Verbindung zwischen den Modulen 2.1 und 2.2 aufeinanderfolgender Reihen. Die Module 2.1 und 2.2 überlappen sich schuppenförmig. Am Oberrand des Moduls 2.1 ist das gleiche Profil 6 wie in Fig. 3 angeklebt und mit einer Dachlatte 10 verschraubt. Zurückgesetzt gegenüber dem Unterrand des Moduls 2.2 ist mit dessen Unterseite der obere Schenkel 7.1 eines U-Profils 7 verklebt, dessen unterer Schenkel 7.2 zwischen die Schenkel des Profils 6 eingreift. In den Spalt zwischen dem oberen Randbereich des Moduls 2.1 und unteren Randbereich des Moduls 2.2, der der Belüftung der Unter- oder Rückseiten der Module dient, können nötigenfalls Wasserrückhaltevorrichtungen wie Dichtungen oder parallel zu den Dachlatten verlaufende Stege aus Kunststoff oder Metall angeordnet sein.

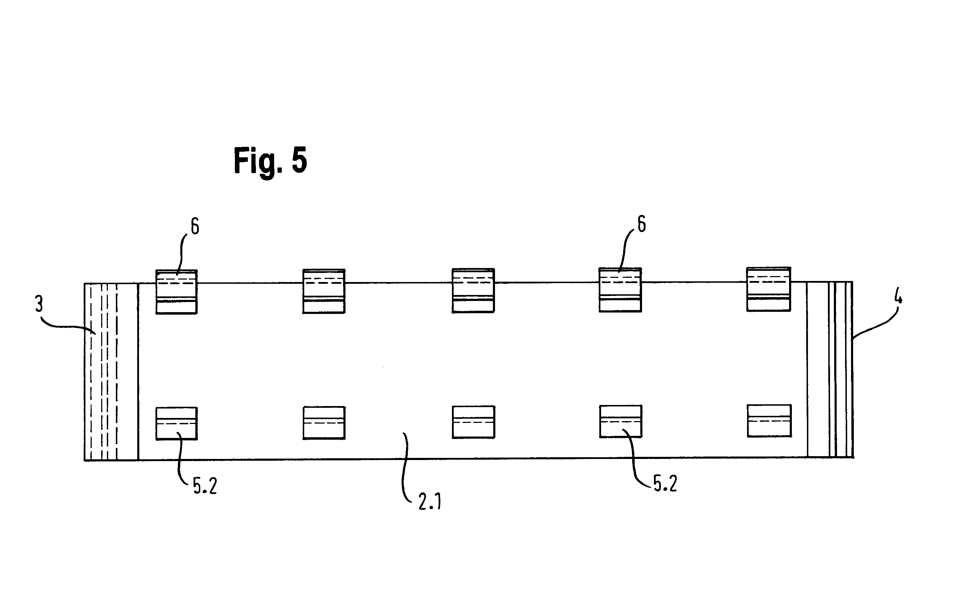

Fig. 5 zeigt ein Modul 2.1 in der Untersicht. Die "seitlichen" Profilstücke 3 und 5 sind von Rand zu Rand des Moduls 2.1 durchgehende Profilschienenabschnitte.

Die "oberen" und "unteren" Profile 6 bzw. 5.2 sind kurze, voneinander beabstandete Profilstücke. Dies vermeidet Spannungen, die anderenfalls aufgrund der unterschiedlichen Wärmedehnungen der Profile einerseits und des Moduls andererseits entstehen können. Vor allem ermöglichen die Abstände zwischen den Profilen 6 bzw. 5.2 die oben genannte Hinterlüftung.

## Patentansprüche

1. Dacheindeckung aus flachen, in Reihen auf einer Dachunterkonstruktion verlegten Dachsteinen (1), von denen jeder einen rechten und einen linken Seitenrandbereich (1.1, 1.2) hat, die komplementär zueinander profiliert sind, so dass die Seitenrandbereiche (1.1, 1.2) benachbarter Dachsteine (1) überlappend ineinander greifen und die Dachsteine eine im Wesentlichen plane, wasserführende Fläche je Reihe bilden, wobei die Dachsteine aufeinanderfolgender Reihen sich in First/Trauf-Richtung schuppenartig überlappen, **dadurch gekennzeichnet, dass** die Dacheindeckung einen Ausschnitt hat, in welchem mindestens ein Photovoltaikmodul (2.1, 2.2) im Wesentlichen plan mit der wasserführenden Fläche der Dacheindeckung angeordnet und über erste Verbindungsmittel (3, 4) an die seitlich angrenzenden Dachsteine (1) angeschlossen sowie firstseitig und traufseitig über zweite Verbindungsmittel (5.1, 5.2; 6) gegen die Dachunterkonstruktion festgelegt ist, wobei sich Dachsteine (1) und Modul (2) in First/ Trauf-Richtung schuppenartig überlappen.

2. Dacheindeckung nach Anspruch 1, **dadurch gekennzeichnet, dass** die ersten Verbindungsmittel (3, 4) Profilstücke umfassen, die mit der Unterseite des Moduls (2) verklebt sind und in die Profilierung des Seitenrandbereiches (1.1, 1.2) des jeweiligen angrenzenden Dachsteins (1) eingreifen.

3. Dacheindeckung nach Anspruch 1 oder 2, **dadurch gekennzeichnet, dass** die firstseitigen zweiten Verbindungsmittel mindestens ein Profil umfassen, das einen Schenkel hat, der mit der Unterseite des firstseitigen Randbereiches des Moduls verklebt ist, von welchem Schenkel etwa rechtwinklig ein nach unten weisender Steg zur Verbindung mit einem Element der Dachunterkonstruktion abgeht.

4. Dacheindeckung nach einem der Ansprüche 1 bis 3, **dadurch gekennzeichnet, dass** die traufseitigen zweiten Verbindungsmittel ein auf dem firstseitigen Oberrand eines traufseitig angrenzenden Dachsteins (1) aufliegendes Taschenprofil (5.1) mit einem nach unten weisenden Schenkel (5.1.3) zur Verbindung mit einem Element (10) der Dachunterkonstruktion sowie ein flaches Z-Profil (5.2) umfassen, dessen einer Arm mit der Unterseite des Moduls (2) verklebt und dessen anderer Arm in das Taschenprofil (5.1) einsteckbar ist.

5. Dacheindeckung nach einem der Ansprüche 1 bis 4, mit in mindestens zwei Reihen angeordneten Photovoltaikmodulen, **gekennzeichnet durch** dritte Verbindungsmittel, die ein liegendes, flaches U-Profil (6) umfassen, dessen oberer Schenkel mit der Unterseite eines traufseitigen Moduls (2.1), an dessen firstseitigem Randbereich verklebt ist und dessen unterer Schenkel einen nach unten weisenden Steg (6.2) zur Verbindung mit einem Element (10) der Dachunterkonstruktion hat sowie ein weiteres Profil (7) umfassen, das einen mit der Unterseite eines Moduls (2.2) der nächsthöheren Reihe verklebten Schenkel (7.1) und einen in das flache U-Profil (6) einsteckbaren Schenkel hat.

6. Dacheindeckung nach Anspruch 5, **dadurch gekennzeichnet, dass** das weitere Profil ein U-Profil (7) ist.

7. Dacheindeckung nach Anspruch 5, **dadurch gekennzeichnet, dass** das weitere Profil ein Z-Profil ist.

8. Dacheindeckung nach Anspruch 5, **dadurch gekennzeichnet, dass** das liegende flache U-Profil (6) der dritten Verbindungsmittel auch als firstseitiges zweites Verbindungsmittel verwendet wird.
